(19) **Europäisches Patentamt**
**European Patent Office**
**Office européen des brevets**

(11) **EP 4 670 971 A1**

(12) **EUROPEAN PATENT APPLICATION**
published in accordance with Art. 153(4) EPC

(43) Date of publication:
**31.12.2025 Bulletin 2026/01**

(21) Application number: **24760328.5**

(22) Date of filing: **20.02.2024**

(51) International Patent Classification (IPC):
**B32B 27/00** (2006.01) **B32B 27/32** (2006.01)
**C08L 23/10** (2006.01) **C08L 53/02** (2006.01)
**C08L 91/00** (2006.01)

(52) Cooperative Patent Classification (CPC):
**B32B 27/00; B32B 27/32; C08L 23/10; C08L 53/02; C08L 91/00**

(86) International application number:
**PCT/JP2024/005888**

(87) International publication number:
**WO 2024/177030 (29.08.2024 Gazette 2024/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.02.2023 JP 2023025511**

(71) Applicant: **Mitsui Chemicals, Inc.**
**Tokyo 104-0028 (JP)**

(72) Inventors:
• **KUSAKA MURASE, Mao**
**Sodegaura-shi, Chiba 299-0265 (JP)**

• **YAMAMOTO, Kanji**
**Sodegaura-shi, Chiba 299-0265 (JP)**
• **NAKATSUJI, Ryo**
**Sodegaura-shi, Chiba 299-0265 (JP)**
• **SUGAWARA, Kei**
**Sodegaura-shi, Chiba 299-0265 (JP)**
• **NAKASHIMA, Tomonori**
**Sodegaura-shi, Chiba 299-0265 (JP)**

(74) Representative: **Hoffmann Eitle**
**Patent- und Rechtsanwälte PartmbB**
**Arabellastraße 30**
**81925 München (DE)**

(54) **SHEET-SHAPED SKIN MATERIAL AND LAYERED BODY HAVING SAID SKIN MATERIAL**

(57) An object of the present invention is to provide, for example, a skin material having a high-quality tactile texture and giving a sense of luxury in a sound when being struck. The skin material according to the present invention is a sheet-shaped skin material having a textured pattern with a kurtosis $R_{ku}$ value of 1.0 or more and 2.7 or less on at least one surface thereof, a shear storage modulus G' of 1 MPa or more and 100 MPa or less, and a thickness of 0.5 mm or more and 3.0 mm or less.

EP 4 670 971 A1

**Description**

Technical Field

The present invention relates to a sheet-shaped skin material and a laminate having the skin material.

Background Art

Thermoplastic elastomers are often used as interior skin materials for instrument panels, door trims, and other parts of automobiles from the viewpoint that weight reduction of materials and simplification of production processes are required. In order to shape sheets for interior skin materials made of thermoplastic elastomers into, for example, instrument panels and door trims, vacuum forming and injection molding are generally performed.

As a means for improving mechanical properties, appearance, tactile texture, and abrasion resistance of laminates of instrument panels or other parts of automobiles, a laminate including an automobile interior material composed of a specific thermoplastic elastomer and a core material composed of a thermoplastic resin has been proposed (Patent Literature 1).

Furthermore, interior materials such as instrument panels of automobiles are required to have acoustic features such as excellent quietness in addition to appearance and tactile texture.

Citation List

Patent Literature

[Patent Literature 1] WO2011/155571

Summary of Invention

Technical Problem

Conventional laminates and molded articles, including the laminate described in Patent Literature 1, are excellent in the tactile texture, but have problems in acoustic features, such as a lack of quietness when being struck, a dry, high-pitched impact sound, and a lack of luxury in the impact sound. Examples of striking include touching a laminate or molded article with the fingers, nails, hand joints, elbows, and knees of a person. The present invention has been made in view of the above problems, and an object of the present invention is to provide, for example, a skin material having a high-quality tactile texture and giving a sense of luxury in a sound when being struck.

Solution to Problem

The present inventions includes the following aspects.

[1] A sheet-shaped skin material having

a textured pattern with a kurtosis $R_{ku}$ value of 1.0 or more and 2.7 or less on at least one surface thereof, and
a shear storage modulus G' of 1 MPa or more and 100 MPa or less.

[2] The skin material according to [1], comprising a thermoplastic elastomer.
[3] The skin material according to [1] or [2], having a thickness of 0.5 mm or more and 3.0 mm or less.
[4] A laminate comprising the skin material according to any of [1] to [3] and a core material laminated to each other, wherein a surface of the skin material opposite to the core material has the textured pattern.
[5] The laminate according to [4], wherein the core material comprises a propylene polymer.
[6] The laminate according to [4] or [5], wherein the core material has a thickness of 1.0 mm or more and 20.0 mm or less.
[7] The skin material according to [2] or [3], wherein the thermoplastic elastomer includes:

100 parts by mass of a propylene polymer (A);
50 parts by mass or more and 700 parts by mass or less of a rubber polymer (B); and
5 parts by mass or more and 400 parts by mass or less of a softener (C).

[8] The skin material according to [7], wherein the rubber polymer (B) comprises (B-1) and/or (B-2) below:

(B-1) an ethylene/$\alpha$-olefin copolymer comprising a constituent unit derived from ethylene and a constituent unit derived from an $\alpha$-olefin having 3 to 20 carbon atoms; and

(B-2) a hydrogenated product of a block copolymer containing at least one block mainly including a conjugated diene monomer unit and at least one block mainly including a vinyl aromatic monomer unit.

[9] A molded laminate comprising the skin material according to any of [1] to [3], [7], and [8].

[10] An instrument panel comprising the laminate according to any of [4] to [6].

Advantageous Effects of Invention

The skin material according to the present invention gives a sense of luxury in a sound when being struck and has a high-quality tactile texture.

Description of Embodiments

<<Surface material>>

The skin material according to the present invention is a sheet-shaped skin material having a textured pattern with a kurtosis $R_{ku}$ value in the range of 1.0 or more and 2.7 or less, preferably 1.5 or more and 2.6 or less, on at least one surface thereof, and a shear storage modulus G' in the range of 1 MPa or more and 100 MPa or less, preferably 3 MPa or more and 70 MPa or less, and even more preferably 5 MPa or more and 25 MPa or less.

The kurtosis $R_{ku}$ value is an index indicating the degree of sharpness of the tip of the textured structure on the surface of the skin material.

The skin material with a kurtosis $R_{ku}$ value of less than 1.0 has a rounded tip of the textured structure on the surface thereof, and the change in contact conditions during striking, resulting in a lack of luxury in the impact sound.

Luxury in the impact sound means that the impact sound is highly quiet and less plasticky. The strong plasticky impression of the impact sound means that the impact sound has a dry, high-pitched sound quality.

The skin material with a kurtosis $R_{ku}$ value of more than 2.7 has a sharp tip of the textured structure on the surface thereof. Thus, the impact sound when striking is less quiet, resulting in a lack of luxury in the impact sound.

The shear storage modulus G' is an index of the hardness of a skin material. A skin material having a shear storage modulus G' of less than 1 MPa has a soft tactile texture when pressed but has an increased stickiness, which is undesirable as the skin material. On the other hand, a skin material having a shear storage modulus G' of more than 100 MPa is not suitable for use as the skin material due to its high rigidity, which makes it difficult to process the skin material in the production process.

The shear storage modulus G' can be varied by changing the material of the skin material.

The skin material having a high-quality tactile texture means that the surface of the skin material has a soft tactile texture.

When the kurtosis $R_{ku}$ value of at least one surface of the skin material and the shear storage modulus G' are within the above ranges, it becomes possible to control the contact state at the time of striking, and therefore, the acoustic features of the impact sound can be controlled. Specifically, the skin material having the kurtosis $R_{ku}$ value of the surface and the shear storage modulus G' in the above ranges has an appropriate hardness of the surface of the skin material and degree of sharpness of the tip of the textured structure. Thus, the impact sound when the skin material is struck is highly quiet and less plasticky. Therefore, the skin material gives a sense of luxury in the impact sound and also has a high-quality tactile texture.

The thickness of the skin material is in the range of preferably 0.5 mm or more and 3.0 mm or less, more preferably 0.8 mm or more and 2.8 mm or less, even more preferably 1.0 mm or more and 2.5 mm or less, and particularly preferably 1.0 mm or more and 2.0 mm or less. A skin material having a thickness of 0.5 mm or more is less likely to be bent due to low flexibility and therefore can be suitably used as the skin material. When the thickness of the skin material is 0.5 mm or more, the skin material has a high-quality tactile texture and gives a sense of luxury in a sound when being struck. A skin material having a thickness of 3.0 mm or less has a small mass and is preferable as the skin material.

The material of the skin material is not particularly limited, and conventionally known materials can be used, and a thermoplastic elastomer is preferable from the viewpoint of a sense of luxury in the impact sound and a high-quality tactile texture.

<Production method of skin material>

Examples of the method for producing a skin material having a kurtosis $R_{ku}$ value of 1.0 or more and 2.7 or less include a method of pressing a sheet using an embossing roll subjected to surface texturing with a kurtosis $R_{ku}$ value of the surface in the above range; a method of vacuum forming or pressure forming a sheet using a mold subjected to surface texturing with a kurtosis $R_{ku}$ value of the surface in the above range; a method of pressing a sheet using a mold subjected to surface texturing with a kurtosis $R_{ku}$ value of the surface in the above range; and a method of injection molding using a mold subjected to surface texturing with a kurtosis $R_{ku}$ value of the surface in the above range.

Among them, a method of injection molding is preferable from the viewpoint of production efficiency of the skin material.

<Thermoplastic elastomer>

Examples of the thermoplastic elastomer include polystyrene-based, polyolefin-based, polyester-based, polyamide-based, polyurethane-based, and polyvinyl chloride-based thermoplastic elastomers. The thermoplastic elastomer may be used singly or in a mixture of two or more thereof.

Among these thermoplastic elastomers, a polystyrene-based thermoplastic elastomer and a polyolefin-based thermoplastic elastomer are preferable because of their excellent light weight properties. The polystyrene-based thermoplastic elastomer and polyolefin-based thermoplastic elastomer may be used singly or in a mixture thereof.

The polystyrene-based thermoplastic elastomer is preferably a hydrogenated product of a block copolymer composed of a polystyrene block and a polybutadiene block.

The polyolefin-based thermoplastic elastomer is preferably a thermoplastic elastomer obtained by dynamically crosslinking a crystalline polyolefin such as a propylene polymer and an ethylene/$\alpha$-olefin/non-conjugated polyene copolymer represented by an ethylene/propylene/non-conjugated diene copolymer (EPDM).

From the viewpoint of a sense of luxury in the impact sound and a high-quality tactile texture, the thermoplastic elastomer preferably contains:

> 100 parts by mass of a propylene polymer (A);
> 50 parts by mass or more and 700 parts by mass or less of a rubber polymer (B); and
> 5 parts by mass or more and 400 parts by mass or less of a softener (C).

In addition, the thermoplastic elastomer preferably contains a component (D), component (E), and a crosslinking aid, which will be described later.

<Propylene polymer (A)>

The propylene polymer (A) (hereinafter, sometimes referred to as a "component (A)") refers to a polymer in which the content of a constituent unit derived from propylene is 50 mol% or more of the constituent units constituting the polymer. The content of the constituent unit derived from propylene in the component (A) is preferably 90 mol% or more.

The component (A) may be used singly or in combinations of two or more thereof.

The component (A) may be a propylene homopolymer or a copolymer of propylene and a comonomer other than propylene.

The structure of the component (A) is not particularly limited, and for example, a constituent unit moiety derived from propylene may have an isotactic structure, a syndiotactic structure, or an atactic structure and is preferably an isotactic structure. In addition, the component (A), when being the copolymer, may be any one of a random type (also referred to as random PP), a block type (also referred to as block PP: bPP), and a graft type.

The comonomer may be a monomer other than propylene, which is copolymerizable with propylene, and is preferably an $\alpha$-olefin having 2 or 4 to 10 carbon atoms. Examples of the monomer other than propylene, which is copolymerizable with propylene, include ethylene, 1-butene, 1-pentene, 4-methyl-1-pentene, 1-hexene, 1-heptene, 1-octene, 1-nonene, and 1-decene. Among these, the comonomer is preferably ethylene, 1-butene, 1-pentene, 4-methyl-1-pentene, 1-hexene, 1-heptene, and 1-octene. These comonomers may be used singly or in combinations of two or more thereof.

The content of the constituent unit derived from the comonomer in the copolymer is preferably 10 mol% or less from the viewpoint of, for example, flexibility.

The component (A) may be synthesized by a conventionally known method, or may be a commercially available product. Examples of the commercially available component (A) include polypropylene manufactured by SunAllomer Ltd., Prime Polypro manufactured by Prime Polymer Co., Ltd., NOVATEC manufactured by Japan Polypropylene Corporation, and SCG PP manufactured by SCG Plastics.

The component (A) may contain a constituent unit derived from at least one biomass-derived monomer.

The component (A) may be a crystalline polymer or a non-crystalline polymer. The term "crystalline" means that a melting point (Tm) is observed by differential scanning calorimetry (DSC).

When the component (A) is a crystalline polymer, a melting point thereof (in accordance with the measurement method of JIS K 7121) is preferably 100°C or higher, more preferably 120°C or higher and preferably 180°C or lower, and more preferably 170°C or lower from the viewpoint of, for example, heat resistance of the skin material.

The melt flow rate (MFR) (according to ASTM D 1238, 2.16 kg load, 230°C) of the component (A) is in the range of preferably 0.1 to 100 g/10 min, and more preferably 0.1 to 50 g/10 min.

The MFR of the component (A) in the above range can easily attain a skin material having excellent heat resistance, mechanical strength, flowability, and forming processability.

<Rubber polymer (B)>

The thermoplastic elastomer more preferably contains 70 parts by mass or more and 500 parts by mass or less, and even more preferably 100 parts by mass or more and 400 parts by mass or less of the rubber polymer (B) per 100 parts by mass of the propylene polymer (A).

Examples of the rubber polymer (B) (hereinafter, sometimes referred to as a "component (B)") include the polystyrene-based thermoplastic elastomer and the polyolefin-based thermoplastic elastomer. The rubber polymer (B) preferably includes (B-1) and/or (B-2) below.

(B-1) An ethylene/$\alpha$-olefin copolymer including a constituent unit derived from ethylene and a constituent unit derived from an $\alpha$-olefin having 3 to 20 carbon atoms

(B-2) A hydrogenated product of a block copolymer containing at least one block mainly including a conjugated diene monomer unit and at least one block mainly including a vinyl aromatic monomer unit.

The ethylene/$\alpha$-olefin copolymer (B-1) is sometimes referred to as a "component (B-1)", and the hydrogenated product (B-2) of the block copolymer is sometimes referred to as a "component (B-2)".

<Ethylene/$\alpha$-olefin copolymer (B-1)>

The ethylene/$\alpha$-olefin copolymer (B-1) is an ethylene/$\alpha$-olefin copolymer including a constituent unit derived from ethylene and a constituent unit derived from an $\alpha$-olefin having 3 to 20 carbon atoms.

The ethylene/$\alpha$-olefin copolymer (B-1) can be obtained by copolymerizing ethylene and an $\alpha$-olefin having 3 to 20 carbon atoms. Examples of the $\alpha$-olefin having 3 to 20 carbon atoms include propylene, 1-butene, 1-pentene, 1-hexene, 4-methyl-1-pentene, 1-heptene, 1-octene, 1-nonene, 1-decene, 1-undecene, and 1-dodecene. Among these, from the viewpoint of imparting flexibility, an $\alpha$-olefin having 3 to 12 carbon atoms is preferable, propylene, 1-butene, and 1-octene are more preferable, and 1-octene is further preferable.

In the component (B-1), the constituent unit derived from ethylene is in the range of preferably 70 to 99 mol% and more preferably 80 to 97 mol%, and the constituent unit derived from an $\alpha$-olefin having 3 to 20 carbon atoms is in the range of preferably 1 to 30 mol% and more preferably 3 to 20 mol% (where the total amount of the constituent unit derived from ethylene and the constituent unit derived from $\alpha$-olefin having 3 to 20 carbon atoms is 100 mol%). A content proportion of the constituent unit derived from ethylene is preferably in the above range in order to obtain a skin material having excellent mechanical strength.

If necessary, a copolymer obtained by copolymerizing a monomer having an unsaturated bond can be used as the component (B-1). Preferred examples of the monomer having an unsaturated bond include conjugated diolefins such as butadiene and isoprene; non-conjugated diolefins such as 1,4-hexadiene; cyclic diene compounds such as dicyclopentadiene and a norbornene derivative; and acetylenes. Among these, ethylidene norbornene (ENB) and dicyclopentadiene (DCP) are more preferable from the viewpoint of flexibility.

The component (B-1) may contain a constituent unit derived from at least one biomass-derived monomer.

The MFR (according to ASTM D 1238, 2.16 kg load, 190°C) of the component (B-1) is in the range of preferably 0.1 to 20 g/10 min, and more preferably 0.3 to 10 g/10 min.

This range of MFR ensures that the skin material has a better balance between flowability and mechanical strength.

The density of the component (B-1) is preferably in the range of 0.8 to 0.9 g/cm$^3$.

The component (B-1) can be produced using a known polymerization catalyst, for example, a Ziegler-Natta catalyst, a vanadium catalyst, and a metallocene catalyst. The polymerization method is not particularly limited, and polymerization can be performed by liquid-phase polymerization methods such as solution polymerization, suspension polymerization, and bulk polymerization, gas-phase polymerization methods, and other known polymerization methods. The copolymer (B-1) is also available as a commercial product. Examples of the commercially available products include ENGAGE 8842 (ethylene-1-octene copolymer) manufactured by The Dow Chemical Company; Vistalon (registered trademark) manufactured by ExxonMobil Chemical Company; ESPRENE (registered trademark) manufactured by Sumitomo Chemical Co., Ltd.; and MITSUI EPT (registered trademark), TAFMER P (registered trademark), and TAFMER A (registered trademark) manufactured by Mitsui Chemicals, Inc.

<Hydrogenated product (B-2) of block copolymer>

The hydrogenated product (B-2) of the block copolymer is a hydrogenated product of a block copolymer containing at least one block mainly including a conjugated diene monomer unit and at least one block mainly including a vinyl aromatic monomer unit.

The component (B-2) is a block copolymer in which at least a part of the conjugated diene monomer units are hydrogenated. Hereinafter, being hydrogenated is sometimes referred to as "hydrogenation".

The conjugated diene monomer unit means a constituent unit derived from a polymer resulting from polymerization of conjugated diene as a monomer, and the structure is a molecule structure in which two carbon atoms in olefin derived from the conjugated diene monomer are bonding sites.

The conjugated diene monomer is a diolefin having a pair of conjugated double bonds. Examples of the conjugated diene monomer include 1,3-butadiene (butadiene), 2-methyl-1,3-butadiene (isoprene), 2,3-dimethyl-1,3-butadiene, 1,3-pentadiene, 2-methyl-1,3-pentadiene, and 1,3-hexadiene. Among these, butadiene and isoprene are preferable from the viewpoint of economy. These may be used singly or in combinations of two or more thereof.

The vinyl aromatic monomer unit means a constituent unit derived from a polymer resulting from polymerization of a vinyl aromatic compound as a monomer, and the structure is a molecule structure in which two carbon atoms in a substituted ethylene group derived from a substituted vinyl group are bonding sites.

The vinyl aromatic monomer is not particularly limited, and examples thereof include vinyl aromatic compounds such as styrene, $\alpha$-methylstyrene, p-methylstyrene, divinylbenzene, 1,1-diphenylethylene, N,N-dimethyl-p-aminoethylstyrene, and N,N-diethyl-p-aminoethylstyrene. These may be used singly or in combinations of two or more thereof. Among these, the vinyl aromatic monomer is preferably styrene from the viewpoint of economy.

The expression "mainly including" regarding the component (B-2) indicates that the polymer block includes 50% by mass or more, preferably 55% by mass or more, of the conjugated diene monomer unit (or the vinyl aromatic monomer unit) in the polymer block. For example, the polymer block mainly including a conjugated diene monomer unit means that the polymer block includes 50% by mass or more and preferably 55% by mass or more of the conjugated diene monomer unit.

It is preferable that the block mainly including the conjugated diene monomer unit is a polymer block mainly including a conjugated diene monomer unit and including a vinyl aromatic monomer unit from the viewpoint of wear resistance. In particular, from the viewpoint of the balance between mechanical strength and impact resistance, the content of the vinyl aromatic monomer unit in the block mainly including the conjugated diene monomer unit is preferably 10% by mass or more and 50% by mass or less, and more preferably 20% by mass or more and 50% by mass or less.

Arrangement of each block in the component (B-2) is not particularly limited, and any suitable arrangement can be adopted as appropriate. For example, in the case where S denotes a polymer block composed of the vinyl aromatic monomer units, and B denotes a polymer block composed of the conjugated diene monomer units, at least a part of which is hydrogenated, examples of the block copolymer include a linear block copolymer represented by SB, $S(BS)_{n1}$ (where n1 is an integer of 1 to 3), $S(BSB)_{n2}$ (where n2 is an integer of 1 to 2), and copolymer represented by $(SB)_{n3}X$ (where n3 is an integer of 3 to 6; and X denotes a residue of a coupling agent such as silicon tetrachloride, tin tetrachloride, and a polyepoxy compound). Among these, linear block copolymers of a 2-block type (diblock) represented by SB, a 3-block type (triblock) represented by SBS, and a 4-block type (tetrablock) represented by SBSB are preferable.

Here, the polymer block B may be a polymer block consisting of conjugated diene monomer units alone or a polymer block mainly including a conjugated diene monomer unit and including a vinyl aromatic monomer unit (a copolymer of the conjugated diene monomer unit and the vinyl aromatic monomer unit), and at least a part of the conjugated diene monomer units are hydrogenated in either polymer block.

The content of the vinyl aromatic monomer unit in the component (B-2) is preferably 10 to 80% by mass, and from the viewpoint of heat resistance and dispersibility, more preferably 20 to 75% by mass, and even more preferably 30 to 70% by mass. If the content of the vinyl aromatic monomer unit is 10% by mass or more, the mechanical physical properties can be further improved. If the content of the vinyl aromatic monomer unit is 80% by mass or less, low temperature properties can be further improved.

The content of the vinyl aromatic monomer unit in the component (B-2) can be measured by nuclear magnetic resonance spectrometry (NMR).

The content of the polymer block mainly including a vinyl aromatic monomer unit in the component (B-2) is preferably 10% by mass or more, and more preferably 10 to 40% by mass from the viewpoint of mechanical strength. Here, the content of the polymer block mainly including a vinyl aromatic monomer unit is defined by the following expression using the mass of the polymer block mainly including a vinyl aromatic monomer unit (where a polymer mainly including a vinyl aromatic monomer unit having an average degree of polymerization of about 30 or less is excluded) obtained by a method of oxidative decomposition of a block copolymer before hydrogenation by using osmium tetroxide as a catalyst with tert-butyl hydroperoxide (the method described in I. M. Kolthoff, et al., J. Polym. Sci. 1, 429 (1946), and hereinafter, also referred to as an "osmium tetroxide decomposition method"):

Content of polymer block mainly including vinyl aromatic monomer unit (% by mass) = [(mass of polymer block mainly including vinyl aromatic monomer unit in block copolymer before hydrogenation/mass of block copolymer before hydrogenation)] $\times$ 100

The molecular weight and composition of the polymer blocks constituting the component (B-2) may be the same or different from each other. For example, the polymer block including the conjugated diene monomer unit and the vinyl aromatic monomer unit, and the polymer block mainly including the conjugated diene monomer unit, may be present in the component (B-2). The boundary between the polymer blocks and the end of the polymer block do not always need to be clearly distinguished.

The aspect of distribution of the vinyl aromatic monomer unit in the respective polymer blocks constituting the component (B-2) is not particularly limited and may be uniformly distributed or distributed in a tapered manner, in a step manner, in a projected manner, or in a depressed manner. Moreover, a crystalline portion may be present in the polymer block.

The aspect of the distribution of the vinyl unit derived from the conjugated diene monomer unit in the respective polymer block constituting the component (B-2) is not particularly limited, and for example, the distribution may be lopsided. Examples of a method for controlling distribution of the vinyl unit include a method of adding a vinylating agent during polymerization and a method of changing a polymerization temperature. The conjugated diene monomer unit may have lopsided distribution of the hydrogenation rate. The distribution of the hydrogenation rate can be controlled by, for example, a method of changing distribution of the vinyl unit or by a method of utilizing the difference in the hydrogenation speed between an isoprene unit and a butadiene unit when a copolymer obtained by copolymerizing isoprene and butadiene is hydrogenated using a hydrogenation catalyst described later.

In the component (B-2), preferably 75 mol% or more, more preferably 85 mol% or more, and even more preferably 97 mol% or more, of unsaturated bonds included in the conjugated diene monomer unit before hydrogenation is hydrogenated, from the viewpoint of heat resistance, aging resistance, and weatherability.

The hydrogenation catalyst used for hydrogenation is not particularly limited, and for example, conventionally known catalysts below can be used:

(1) supported heterogeneous hydrogenation catalysts in which a metal such as Ni, Pt, Pd, and Ru is supported on, for example, carbon, silica, alumina, or diatomaceous earth;
(2) so-called Ziegler-type hydrogenation catalysts using an transition metal salt, such as an organic acid salt and an acetylacetone salt of, for example, Ni, Co, Fe, and Cr, and a reducing agent, such as organic aluminum; or
(3) homogeneous hydrogenation catalysts of organic metal compounds of, for example, Ti, Ru, Rh, and Zr, so-called organometallic complexes.

Specific examples of the hydrogenation catalyst include hydrogenation catalysts described in patent literature JP S42-008704B, JP S43-006636B, JP S63-004841B, JP H01-037970B, JP H01-053851B, and JP H02-009041B. Among these, examples of preferred hydrogenation catalysts include reducing organic metal compounds such as a titanocene compound.

As the titanocene compound, compounds described in patent literature JP H08-109219A can be used, for example. Examples of the titanocene compound include compounds having at least one or more ligand having a (substituted) cyclopentadienyl skeleton such as biscyclopentadienyltitanium dichloride and monopentamethylcyclopentadienyltitanium trichloride, an indenyl skeleton, or a fluorenyl skeleton.

Examples of the reducing organic metal compound include an organic alkali metal compound of, for example, organic lithium, an organic magnesium compound, an organic aluminum compound, an organic boron compound, and an organic zinc compound.

A method of polymerizing the block copolymer before hydrogenation is not particularly limited, and a known method can also be used. Examples of the method of polymerizing a block copolymer include methods described in patent literature JP S36-019286B, JP S43-017979B, JP S46-032415B, JP S49-036957B, JP S48-002423B, JP S48-004106B, JP S56-028925B, JP S59-166518A, and JP S60-186577A.

If necessary, the component (B-2) may have a polar group. Examples of the polar group include a hydroxy group, a carboxyl group, a carbonyl group, a thiocarbonyl group, an acid halide group, an acid anhydride group, a thiocarboxylic acid group, an aldehyde group, a thioaldehyde group, a carboxylic acid ester group, an amide group, a sulfonic acid group, a sulfonic acid ester group, a phosphorus acid group, a phosphorus acid ester group, an amino group, an imino group, a nitrile group, a pyridyl group, a quinoline group, an epoxy group, a thioepoxy group, a sulfide group, an isocyanate group, an isothiocyanate group, a halogenated silicon group, an alkoxysilicon group, a halogenated tin group, a boronic acid group, a boron containing group, a boronic acid salt group, an alkoxytin group, and a phenyltin group.

In the block copolymer before hydrogenation, the amount of the vinyl bond contained in the conjugated diene monomer unit is preferably 5 mol% or more from the viewpoint of flexibility and scratch resistance, and preferably 70 mol% or less from the viewpoint of productivity, elongation at break, and scratch resistance. The amount of the vinyl bond in the conjugated diene monomer unit is more preferably 10 to 50 mol%, even more preferably 10 to 30 mol%, and still more preferably 10 to 25 mol%.

The amount of the vinyl bond means the proportion of the conjugated diene before hydrogenation integrated in the bonding modes of 1,2-bond and 3,4-bond among the one integrated in the bonding modes of 1,2-bond, 3,4-bond, and 1,4-bond. The amount of the vinyl bond can be measured by NMR.

The weight-average molecular weight of the component (B-2) before crosslinking is not particularly limited but is preferably 50,000 or more from the viewpoint of scratch resistance, preferably 400,000 or less, and more preferably 50,000 to 300,000 from the viewpoint of forming flowability. The molecular weight distribution (Mw/Mn: weight-average molecular weight /number-average molecular weight) is not particularly limited but is preferably a value close to 1 from the viewpoint of scratch resistance. The weight-average molecular weight and the number-average molecular weight can be determined using tetrahydrofuran (1.0 mL/min) as a solvent under the condition of an oven temperature of 40°C by gel permeation chromatography (GPC; manufactured by SHIMADZU Corporation, apparatus name "LC-10") and a column of TSKgelGMHXL (4.6 mm ID $\times$ 30 cm, two columns). The weight-average molecular weight (Mw), number-average molecular weight (Mn), and the molecular weight distribution (Mw/Mn) are calculated as a molecular weight in terms of polystyrene.

The component (B-2) may contain a constituent unit derived from at least one biomass-derived monomer.

<Softener (C)>

The softener (C) (hereinafter sometimes referred to as a "component (C)") is not particularly limited, and a plasticizer usually used for rubber can be used. From the viewpoint of compatibility with, for example, the propylene polymer (A) and the rubber polymer (B), process oils composed of hydrocarbons such as paraffinic, naphthenic, and aromatic are preferable as the component (C). Among these, paraffinic hydrocarbon-based process oils are preferable from the viewpoint of weatherability and coloring properties, and naphthenic hydrocarbon-based process oils are particularly preferable from the viewpoint of compatibility. From the viewpoint of thermal stability and photostability, the content of the aromatic hydrocarbon in the process oil is preferably 10% or less, more preferably 5% or less, and even more preferably 1% or less in a ratio of carbon atoms specified by ASTM D2140-97.

The thermoplastic elastomer more preferably contains 10 parts by mass or more and 300 parts by mass or less, and even more preferably 50 parts by mass or more and 200 parts by mass or less of the softener (C) per 100 parts by mass of the propylene polymer (A).

The component (C) may be a softener produced using at least one biomass raw material.

<Polyorganosiloxane (D)>

When the skin material is the thermoplastic elastomer, the structure of a polyorganosiloxane (D) (hereinafter sometimes referred to as a component (D)"), one of the components that may be contained in the thermoplastic elastomer, is not particularly limited but is preferably a linear, branched, or crosslinking polymer structure from the viewpoint of wear resistance and feeling by touch.

The component (D) is not particularly limited, and a known component can also be used. Preferred polyorganosiloxane (D) is a polymer including a siloxane unit having a substituent such as an alkyl group, a vinyl group, and an aryl group. Among these, particularly, polyorganosiloxane having an alkyl group is preferable, and polyorganosiloxane having a methyl group is more preferable.

Examples of the polyorganosiloxane having a methyl group include polydimethylsiloxane, polymethylphenylsiloxane, and polymethylhydrogensiloxane. Among these, polydimethylsiloxane is preferable.

The kinematic viscosity of the component (D) is not particularly limited. From the viewpoint of wear resistance and scratch resistance, the kinematic viscosity (25°C) specified in JIS Z8803 is preferably 5,000 centistokes (cSt) or more. The kinematic viscosity of the component (D) is preferably less than 3,000,000 cSt because dispersibility of the component (D) in the resulting skin material tends to be improved, the appearance is good, and stability in quality during melt extrusion tends to be further improved. The kinematic viscosity of the component (D) is more preferably 10,000 cSt or more and less than 3,000,000 cSt, and even more preferably 50,000 cSt or more and less than 3,000,000 cSt.

The thermoplastic elastomer preferably contains 2 to 30 parts by mass, more preferably 2 to 25 parts by mass, and even more preferably 2 to 20 parts by mass of the polyorganosiloxane (D) per 100 parts by mass of the propylene polymer (A), in addition to the component (B) and the component (C).

When the amount of the polyorganosiloxane (D) blended is 2 parts by mass or more, the effect of improving scratch resistance is sufficiently exhibited, and when the amount is 30 parts by mass or less, the dispersibility in the skin material is excellent.

When the skin material is the thermoplastic elastomer, the thermoplastic elastomer preferably contains, if necessary, an organic peroxide (E) (hereinafter, sometimes referred to as a "component (E)").

The component (E) acts as, for example, a crosslinking initiator for the components (A) and (B) by dynamically heat-treating the thermoplastic elastomer.

<Organic peroxide (E)>

Examples of the organic peroxide (E) include peroxyketals such as 1,1-bis(t-butylperoxy)-3,3,5-trimethylcyclohexane, 1,1-bis(t-hexylperoxy)-3,3,5-trimethylcyclohexane, 1,1-bis(t-hexylperoxy)cyclohexane, 1,1-bis(t-butylperoxy)cyclododecane, 1,1-bis(t-butylperoxy)cyclohexane, 2,2-bis(t-butylperoxy)octane, n-butyl-4,4-bis(t-butylperoxy)butane, and n-butyl-4,4-bis(t-butylperoxy)valerate; dialkyl peroxides such as di-t-butyl peroxide, dicumyl peroxide, t-butylcumyl peroxide, $\alpha,\alpha'$-bis(t-butylperoxy-m-isopropyl)benzene, $\alpha,\alpha'$-bis(t-butylperoxy)diisopropylbenzene, 2,5-dimethyl-2,5-bis(t-butylperoxy)hexane, and 2,5-dimethyl-2,5-bis(t-butylperoxy)hexyne-3; diacyl peroxides such as acetyl peroxide, isobutyryl peroxide, octanoyl peroxide, decanoyl peroxide, lauroyl peroxide, 3,5,5-trimethylhexanoyl peroxide, benzoyl peroxide, 2,4-dichlorobenzoyl peroxide, and m-toluoyl peroxide; peroxyesters such as t-butyl peroxyacetate, t-butyl peroxyisobutyrate, t-butyl peroxy-2-ethylhexanoate, t-butyl peroxylaurylate, t-butyl peroxybenzoate, di-t-butyl peroxyisophthalate, 2,5-dimethyl-2,5-di(benzoylperoxy)hexane, t-butyl peroxymaleic acid, t-butyl peroxyisopropyl carbonate, and cumyl peroxyoctate; and hydroperoxides such as t-butyl hydroperoxide, cumene hydroperoxide, diisopropylbenzene hydroperoxide, 2,5-dimethylhexane-2,5-dihydroperoxide, and 1,1,3,3-tetramethylbutyl peroxide.

Among these components, 1,1-bis(t-butylperoxy)-3,3,5-trimethylcyclohexane, di-t-butyl peroxide, dicumyl peroxide, 2,5-dimethyl-2,5-bis(t-butylperoxy)hexane, and 2,5-dimethyl-2,5-bis(t-butylperoxy)hexyne-3 are preferable as the organic peroxide (E) from the viewpoint of, for example, thermal decomposition temperature and crosslinking performance.

The component (E) may be used singly or in combinations of two or more thereof.

When the thermoplastic elastomer contains the component (E), the content thereof is preferably 2 to 6 parts by mass, and more preferably 2 to 4 parts by mass per 100 parts by mass of the component (A), from the viewpoint of forming flowability.

When the thermoplastic elastomer contains the component (E), it is preferable to use a crosslinking aid below in combination.

<Crosslinking aids>

Various known crosslinking aids can be used as the crosslinking aid. Examples of the crosslinking aid include a monofunctional monomer and a polyfunctional monomer. Such a crosslinking aid can control the rate of crosslinking reaction.

The monofunctional monomer is preferably a radically polymerizable vinyl monomer. Examples of the radically polymerizable vinyl monomer include an unsaturated nitrile monomer such as acrylonitrile and methacrylonitrile, an aromatic vinyl monomer, an acrylic acid ester monomer, a methacrylic acid ester monomer, an acrylic acid monomer, a methacrylic acid monomer, a maleic anhydride monomer, and an N-substituted maleimide monomer.

Examples of the monofunctional monomer include styrene, methylstyrene, chloromethylstyrene, hydroxystyrene, tert-butoxystyrene, acetoxystyrene, chlorostyrene, acrylonitrile, methacrylonitrile, methyl acrylate, ethyl acrylate, n-butyl acrylate, isobutyl acrylate, methyl methacrylate, ethyl methacrylate, n-butyl methacrylate, isobutyl methacrylate, 2-ethylhexyl methacrylate, maleic anhydride, methylmaleic anhydride, 1,2-dimethylmaleic anhydride, ethylmaleic anhydride, phenylmaleic anhydride, N-methylmaleimide, N-ethylmaleimide, N-cyclohexylmaleimide, N-laurylmaleimide, and N-cetylmaleimide. Among these, styrene, acrylonitrile, methacrylonitrile, methyl acrylate, maleic anhydride, and N-methylmaleimide and the like are preferable from the viewpoint of easiness of the reaction and general versatility. These monofunctional monomers may be used singly or in combinations of two or more thereof.

The polyfunctional monomer is a monomer having a plurality of radically polymerizable functional groups as the functional group. The polyfunctional monomer is preferably a monomer having a vinyl group. The number of the functional group in the polyfunctional monomer is preferably 2 or 3.

Examples of the polyfunctional monomer preferably include divinylbenzene, triallyl isocyanurate, triallyl cyanurate, diacetone diacrylamide, polyethylene glycol diacrylate, polyethylene glycol dimethacrylate, trimethylolpropane trimethacrylate, trimethylolpropane triacrylate, ethylene glycol dimethacrylate, triethylene glycol dimethacrylate, diethylene glycol dimethacrylate, diisopropenyl benzene, p-quinone dioxime, p,p'-dibenzoyl quinone dioxime, phenyl maleimide, allyl methacrylate, N,N'-m-phenylene bismaleimide, diallyl phthalate, tetraallyl oxyethane, and 1,2-polybutadiene, and divinylbenzene and triallylisocyanurate are more preferable. These polyfunctional monomers may be used singly or in combinations of two or more thereof.

When the skin material contains a crosslinking aid, the content of the crosslinking aid is preferably 1 to 100 parts by mass, and more preferably 1 to 50 parts by mass per 100 parts by mass of the component (E).

The MFR (according to ASTM D 1238, 230°C, 2.16 kg load) of the thermoplastic elastomer is in the range of preferably 1 to 350 g/10 min, more preferably 10 to 330 g/10 min, and even more preferably 50 to 300 g/10 min.

The skin material may contain, within a range that does not impair the object of the present invention, additive such a weathering stabilizer, a heat stabilizer, an antistatic agent, a slip agent, an antiblocking agent, an anti-fogging agent, a nucleating agent, a decomposing agent, a pigment, a dye, a plasticizer, a hydrochloric acid absorbent, an antioxidant, a reinforcing agent, a filler, a processing aid, an activator, a moisture absorbent, an adhesive, a flame retardant, and a release agent. The additives may be used singly or in combinations of two or more thereof. The skin material may contain a crosslinking agent and a crosslinking promoter other than the crosslinking initiator and the crosslinking aid within a range that does not impair the object of the present invention.

The additives may each be an additive produced using at least one biomass raw material.

<<Laminate>>

The laminate according to the present invention is a laminate in which the skin material according to the present invention and a base material (core material) are laminated.

In the laminate including the skin material and the base material (core material) laminated to each other, the surface of the skin material opposite to the core material preferably has a textured pattern with a kurtosis $R_{ku}$ value in the above range from the viewpoint of a sense of luxury in the impact sound and a high-quality tactile texture.

The laminate including the skin material and a core material described later laminated to each other can be obtained by a known production method except that the skin material used is the skin material of the present invention. Specific examples of the production method include a method of bonding the skin material of the present invention to a core material obtained by various known molding methods; and a method of placing a core material obtained in advance in a mold whose surface has been subjected to texturing so that the kurtosis $R_{ku}$ value falls within the above range, then injection molding a thermoplastic elastomer serving as the skin material to form a laminate.

The laminate may include only the skin material and the core material or may include materials other than the skin material and the core material.

When the skin material is used, for example, as an automobile interior material, it is preferable to use the laminate than to use the skin material alone from the viewpoint of mechanical strength.

<Base material (core material)>

The base material (core material) laminated with the skin material is not particularly limited, and a known core material may be used. Examples of the material constituting the base material (core material) include thermoplastic resins and polymers such as olefin-based polymers such as ethylene polymer, propylene polymer, ethylene/vinyl acetate copolymer, ethylene/acrylic acid ester copolymer, ionomer, poly-1-butene, and poly-4-methyl-1-pentene; vinyl polymers such as polystyrene, polyvinyl chloride, polyvinyl alcohol, polyvinyl acetate, vinyl chloride-vinyl acetate copolymer, polyvinyl butyral, and polyvinylpyrrolidone; polyamides such as nylon 6, nylon 66, nylon 7, nylon 10, nylon 1, nylon 12, nylon 610, and polymetaxylene adipamide; polyesters such as polyethylene terephthalate, polyethylene terephthalate/isophthalate, polybutylene terephthalate, and polylactic acid; cellulose resins such as cellophane, cellulose acetate, nitrocellulose, cellulose acetate propionate, and cellulose acetate butyrate; polyvinyl alcohol, ethylene/vinyl alcohol copolymer, polycarbonate, polycaprolactone, polyglycolic acid, polybutylene succinate, and polyethylene succinate. Examples of the ethylene polymer include high-density polyethylene (HDPE), medium-density polyethylene (MDPE), linear low-density polyethylene (LLDPE), and high-pressure low-density polyethylene (HP-LDPE). Examples of the propylene polymer include a propylene homopolymer, a polypropylene random copolymer, and a polypropylene block copolymer.

Among these, propylene polymer is preferable because of its light weight and excellent rigidity.

The core material may be a core material produced using at least one biomass raw material.

The thickness of the core material is in the range of preferably 1.0 mm or more and 20.0 mm or less, and more preferably 2.0 mm or more and 15.0 mm or less. A laminate using a core material having a thickness of 1.0 mm or more is highly durable and less likely to be curved. A laminate using a core material having a thickness of 20.0mm or less has a small mass and is preferable as the laminate.

<<Application of skin material and laminate>>

The skin material and laminate according to the present invention may be used for various applications.

The skin material and laminate are not particularly limited in application. For example, the skin material and laminate are suitable for various known applications such as automobile parts, civil engineering and building materials, electrical and electronic parts, sanitary goods, films, sheets, foams, and artificial leather. In particular, the skin material and laminate can be suitably used for automobile parts such as automobile interior parts and skin materials such as artificial leather.

<Automobile part>

Examples of the automobile parts for which the skin material and the laminate may be used include ceiling materials, interior sheets, bumper moldings, side moldings, air spoilers, air duct hoses, cup holders, side brake grips, shift knob covers, seat adjustment knobs, flapper door seals, wire harness grommets, rack-and-pinion boots, suspension cover boots, glass guides, inner belt line seals, roof guides, trunk lid seals, molded quarter window gaskets, corner moldings, glass encapsulations, hood seals, secondary seals, various packings, bumper parts, body panels, side shields, glass run channels, instrument panel (skins), door (skins), ceiling (skins), weather stripping materials, hoses, steering wheels, boots, wire harness covers, and seat adjuster covers.

In particular, the skin material and the laminate can be suitably used for instrument panels from the viewpoint of a sense of luxury in the impact sound and a high-quality tactile texture.

<Civil engineering and building material>

Examples of the civil engineering and building material for which the skin material and the laminate can be used include civil engineering materials and building materials such as soil improvement sheets, water supply plates, and noise prevention walls, various civil engineering and building gaskets and sheets, water sealing materials, joint materials, and building window frames.

<Electrical and electronic part>

Examples of the electrical and electronic components for which the skin material and the laminate can be used include an electric wire covering material, a connector, a cap, and a plug.

<Daily necessity>

Examples of daily necessities for which the skin material and the laminate can be used include sporting goods such as sports shoe soles, ski boots, tennis rackets, bindings for ski plates, bat grips, and miscellaneous goods such as pen grips, toothbrush grips, hairbrushes, fashion belts, various caps, and shoe inner soles.

Examples

Hereinafter, the present invention will be more specifically described on the basis of examples. However, the present invention is not limited to these examples at all.

Test methods for components of raw materials used in Examples and Comparative Examples are as follows.

(1) Hydrogenation rate (%)

The hydrogenation rate was calculated by measuring nuclear magnetic resonance spectrometry (NMR) under the following conditions:

Apparatus: JNM-LA400 manufactured by JEOL Ltd.
Solvent: deuterated chloroform
Chemical shift reference: tetramethylsilane (TMS)
Sample concentration: 50 mg/mL
Observation frequency: 400 MHz

Pulse delay: 2.904 seconds
Number of scans: 64
Pulse width: 45°
Temperature: 26°C

(2) Content of monomer unit and content of bond unit

The contents of a vinyl aromatic monomer unit, an ethylene monomer unit, a butylene monomer unit, a 1,4-bond unit in butadiene, a 1,2-bond unit in butadiene, and a 3,4-bond unit in butadiene were each calculated by measuring NMR under the following conditions:

Apparatus: JNM-LA400 manufactured by JEOL Ltd.
Solvent: deuterated chloroform
Chemical shift reference: tetramethylsilane (TMS)
Sample concentration: 50 mg/mL
Observation frequency: 400 MHz
Pulse delay: 2.904 seconds
Number of scans: 64
Pulse width: 45°
Temperature: 26°C
Under the following conditions, $^{13}$C-NMR was measured to calculate the mass fraction (% by mass) of each constituent unit contained in the component (B).
Apparatus: ECX400P nuclear magnetic resonance apparatus manufactured by JEOL Ltd.
Temperature: 120°C
Solvent: orthodicholorbenzene/deuterated benzene = 4/1
(volume ratio)
Cumulative number: 8000

(3) Content of styrene polymer block (Os value)

The content of the polymer block having styrene as main component was measured using the block copolymer before hydrogenation according to the method described in I. M. Kolthoff, et al., J. Polym. Sci. 1, 429 (1946) (osmium tetroxide decomposition method). The block copolymer before hydrogenation was decomposed using a 0.1 g/125 mL tertiary butanol solution of osmic acid. The content of the polymer block having styrene as a main component was calculated using the following expression. The content of the polymer block having styrene as a main component obtained here is referred to as an "Os value".

Content of polymer block having styrene as main component (Os value; % by mass) = [(mass of polymer block having styrene as main component in block copolymer before hydrogenation)/(mass of block copolymer before hydrogenation)] $\times$ 100

(4) Peak temperature of loss tangent (tan $\delta$)

The loss tangent (tan $\delta$) was calculated by measuring the viscoelastic spectrum under the following conditions:

Apparatus: ARES manufactured by TA Instruments
Strain: 0.1%
Frequency: 1 Hz

(5) Weight-average molecular weight

The weight-average molecular weight in terms of polystyrene was measured under the following conditions:

Solvent: tetrahydrofuran (1.0 mL/min)
Oven temperature: 40°C
GPC: LC-10 (manufactured by SHIMADZU CORPORATION)
Column: TSKgelGMHXL (4.6 mm ID $\times$ 30 cm, two columns)

In Examples and Comparative Examples, the following polymers were used.

[Example 1]

[Propylene polymer (A)]

A propylene homopolymer (homo PP) (SunAllomer (registered trademark) PL400A manufactured by SunAllomer Ltd.) (with a melt flow rate (MFR) of 2.0 g/10 min under conditions of 230°C and a load of 2.16 kg) was used as the propylene polymer (A).

[Ethylene/$\alpha$-olefin copolymer (B-1)]

An ethylene-1-octene copolymer (ENGAGE 8842 manufactured by The Dow Chemical Company) was used as the ethylene/$\alpha$-olefin copolymer (B-1) (hereinafter, also referred to as a component (B-1)). The content of ethylene in the copolymer was 55% by mass, the content of octene was 45% by mass, and MFR under conditions of 190°C and a load of 2.16 kg was 1.0 g/10 min.

[Hydrogenated product (B-2) of block copolymer]

The following hydrogenated products (B-2a), (B-2b), and (B-2c) were each used as the hydrogenated product (B-2) of the block copolymer (hereinafter, also referred to as a component (B-2)).
Hydrogenated products (B-2a), (B-2b), and (B-2c) (hereinafter, also referred to as "hydroxylated product (B-2a)", "hydroxylated product (B-2b)", and "hydrogenated product (B-2c)", respectively) of a block copolymer containing at least one block mainly including a conjugated diene monomer unit and at least one block mainly including a vinyl aromatic monomer unit were prepared as described below.

<Production of hydrogenated product (B-2a)>

(1) Preparation of hydrogenation catalyst

The hydrogenation catalyst used for the hydrogenation reaction in the block copolymer was prepared by the following method:
A reaction vessel purged with nitrogen was charged with 1 L of dried and purified cyclohexane, 100 mmol of bis(cyclopentadienyl)titanium dichloride was added. With sufficient stirring, an n-hexane solution containing 200 mmol of trimethylaluminum was added, to allow them to react at room temperature for about three days.

(2) Production of block copolymer

Batch polymerization was performed using a tank reactor with a stirrer having an inner volume of 10 L and a jacket. First, 6.4 L of cyclohexane and 75 g of styrene were added to the stirrer and the tank reactor. Tetramethylethylenediamine (TMEDA) was added such that the molar amount of TMEDA was 0.25 times as much as the molar amount of Li in an n-butyllithium initiator. Thereafter, the n-butyllithium initiator was added such that the molar amount of Li in the n-butyllithium initiator was 10 mmol, and a first polymerization reaction was then allowed to proceed at an initial temperature of 65°C. After completion of the first polymerization reaction, a cyclohexane solution containing 470 g of butadiene and 380 g of styrene (monomer concentration: 22% by mass) was continuously fed to the reactor at a constant rate over 60 minutes, to allow a second polymerization reaction to proceed. After the completion of the second polymerization reaction, a cyclohexane solution containing 75 g of styrene (monomer concentration: 22% by mass) was further added over 10 minutes, to allow a third polymerization reaction to proceed. Thereafter, the third polymerization reaction was terminated by addition of methanol to give a copolymer. In the obtained copolymer, the styrene content was 53% by mass, and the content of the polymer block having styrene as a main component in the copolymer was 15% by mass. In the copolymer block (i.e., copolymer block containing the conjugated diene monomer unit and the vinyl aromatic monomer unit), the styrene content was 45% by mass, and the amount of the vinyl bond was 23 mol%.
The resulting copolymer (block copolymer) was then subjected to a hydrogenation reaction in (3).

(3) Production of hydrogenated product of block copolymer

To the block copolymer obtained in (2) was added the hydrogenation catalyst obtained in (1) above at 100 ppm in terms of titanium per 100 parts by mass of the block copolymer to perform a hydrogenation reaction in the block copolymer in an environment at a hydrogen pressure of 0.7 MPa and a temperature of 75°C. To the polymer solution containing a hydrogenated product of the block copolymer obtained by the hydrogenation reaction was added 0.3 parts by mass of octadecyl-3-(3,5-di-t-butyl-4-hydroxyphenyl)propionate as a stabilizer per 100 parts by mass of the hydrogenated product of the block copolymer.

The obtained hydrogenated product (B-2a) of the block copolymer had a weight average molecular weight of 160,000. The hydrogenation rate of double bonds in butadiene contained in the hydrogenated product (B-2a) of the block copolymer was 99%. In addition, one of the tan $\delta$ peaks obtained by viscoelastic measurements was present at -15°C.

<Production of hydrogenated product (B-2b)>

(1) Production of block copolymer

Batch polymerization was performed using a tank reactor with a stirrer having an inner volume of 10 L and a jacket. First, 6.4 L of cyclohexane and 325 g of styrene were added to the stirrer and the tank reactor. TMEDA was added such that the molar amount of TMEDA was 0.40 times as much as the molar amount of Li in an n-butyllithium initiator, and the n-butyllithium initiator was then added such that the molar amount of Li in the n-butyllithium initiator was 20 mmol. A first polymerization reaction was then allowed to proceed at an initial temperature of 65°C. After completion of the first polymerization reaction, a cyclohexane solution containing 350 g of butadiene (monomer concentration: 22% by mass) was continuously fed to the reactor at a constant rate over 60 minutes, to allow a second polymerization reaction to proceed. After the completion of the second polymerization reaction, a cyclohexane solution containing 325 g of styrene (monomer concentration: 22% by mass) was further added over 10 minutes, to allow a third polymerization reaction to proceed. Thereafter, the third polymerization reaction was terminated by addition of methanol to give a copolymer. The content of the polymer block having styrene as a main component in the obtained copolymer was 65% by mass, while the amount of the vinyl bond was 40 mol%.

The resulting copolymer (block copolymer) was then subjected to a hydrogenation reaction in (2).

(2) Production of hydrogenated product of block copolymer

To the block copolymer obtained in (1) was added the hydrogenation catalyst obtained in (1) of "Production of hydrogenated product (B-2a)" at 100 ppm in terms of titanium per 100 parts by mass of the block copolymer. Thereafter, a hydrogenation reaction in the block copolymer was performed in an environment at a hydrogen pressure of 0.7 MPa and a temperature of 75°C. To the polymer solution containing a hydrogenated product of the block copolymer obtained by the hydrogenation reaction was added 0.3 parts by mass of octadecyl-3-(3,5-di-t-butyl-4-hydroxyphenyl)propionate as a stabilizer per 100 parts by mass of the hydrogenated product of the block copolymer.

The obtained hydrogenated product (B-2b) of the block copolymer had a weight average molecular weight of 50,000. The hydrogenation rate of double bonds in butadiene contained in the hydrogenated product (B-2b) of the block copolymer was 99%.

<Production of hydrogenated product (B-2c)>

(1) Production of block copolymer

Batch polymerization was performed using a tank reactor with a stirrer having an inner volume of 10 L and a jacket. First, 6.4 L of dried and purified cyclohexane and 175 g of styrene, were added to the stirrer and the tank reactor. TMEDA was added such that the molar amount of TMEDA was 0.30 times as much as the molar amount of Li in an n-butyllithium initiator. Thereafter, the n-butyllithium initiator was added such that the molar amount of Li in the n-butyllithium initiator was 11 mmol. A first polymerization reaction was then allowed to proceed at an initial temperature of 65°C. After completion of the first polymerization reaction, a cyclohexane solution containing 650 g of butadiene (monomer concentration: 22% by mass) was continuously fed to the reactor at a constant rate over 60 minutes, to allow a second polymerization reaction to proceed. After the completion of the second polymerization reaction, a cyclohexane solution containing 175 g of styrene (monomer concentration: 22% by mass) was further added over 10 minutes, to allow a third polymerization reaction to proceed. Thereafter, the third polymerization reaction was terminated by addition of methanol to give a copolymer. The content of the polymer block having styrene as a main component in the obtained copolymer was 35% by mass, while the amount of the vinyl bond was 36 mol%.

The resulting copolymer (block copolymer) was then subjected to a hydrogenation reaction in (2).

(2) Production of hydrogenated product of block copolymer

To the block copolymer obtained in (1) was added the hydrogenation catalyst obtained in (1) of the "Production of hydrogenated product (B-2a)" at 100 ppm in terms of titanium per 100 parts by mass of the block copolymer. The block copolymer was subjected to a hydrogenation reaction in an environment at a hydrogen pressure of 0.7 MPa and a temperature of 75°C to give a reaction solution. To the obtained reaction solution was added 0.3 parts by mass of octadecyl-3-(3,5-di-t-butyl-4-hydroxyphenyl)propionate as a stabilizer per 100 parts by mass of the hydrogenated product of the block copolymer.

The obtained hydrogenated product (B-2c) of the block copolymer had a weight average molecular weight of 150,000. The hydrogenation rate of double bonds in butadiene contained in the hydrogenated product (B-2c) of the block copolymer was 99%.

[Softener (C)]

Paraffinic oil (Diana Process Oil PW-100, manufactured by Idemitsu Kosan Co., Ltd.) was used as the softener (C).

[Polyorganosiloxane (D)]

The polyorganosiloxane (D) used was a master batch composed of 50% by mass of dimethylsiloxane and 50% by mass of polypropylene (MB50-001, manufactured by DuPont Toray Specialty Materials, K.K.).

[Organic peroxide (E)]

The organic peroxide (E) used was a mixture of the following organic peroxide and the following crosslinking aid:

Organic peroxide: 2,5-dimethyl-2,5-bis(t-butylperoxy)hexane (PERHEXA 25B manufactured by NOF Corporation)
Crosslinking aid: divinylbenzene (manufactured by Wako Pure Chemical Industries, Ltd.; hereinafter, referred to as "DVB") and triallyl isocyanurate (manufactured by Mitsubishi Chemical Corporation; hereinafter, referred to as "TAIC")

<Production of thermoplastic elastomer>

An extruder used was a twin screw extruder having an oil inlet port in a central portion of a barrel (30 mmφ, L/D = 74; manufactured by KOBE STEEL, LTD., "KTX-30"). The screw was a double start screw having a kneading portion before and after an inlet port. The raw materials listed in Table 1 other than the softener (C) were mixed in batch in the composition ratio (parts by mass ratio) shown in Table 1. Then, the mixed raw material was introduced into a twin screw extruder (a cylinder temperature of 200°C) by a constant volume feeder. Subsequently, an amount of the softener (C) shown in Table 1 was injected by a pump from the inlet port located in the central portion of the extruder. The obtained kneaded product was subjected to melt extrusion to obtain a thermoplastic elastomer 1 and a thermoplastic elastomer 2.

[Table 1]

Table 1

|  |  |  | Thermoplastic elastomer 1 | Thermoplastic elastomer 2 |
|---|---|---|---|---|
| Propylene polymer (A) | Propylene homopolymer | parts by mass | 100 | 100 |
| Ethylene/α-olefin copolymer (B-1) | Ethylene-1-octene copolymer | parts by mass | 55 | 83 |

(continued)

| | | | Thermoplastic elastomer 1 | Thermoplastic elastomer 2 |
|---|---|---|---|---|
| Hydrogenated product (B-2) of block copolymer | Hydrogenated product (B-2a) | parts by mass | 70 | 83 |
| | Hydrogenated product (B-2b) | parts by mass | 15 | 17 |
| | Hydrogenated product (B-2c) | parts by mass | 30 | 17 |
| Softener (C) | Paraffinic oil | parts by mass | 145 | 133 |
| Polyorganosiloxane (D) | MB50-001 | parts by mass | 10 | 5 |
| Organic peroxide (E) | PERHEXA 25B | parts by mass | 3.5 | 1.7 |
| | DVB | parts by mass | 0.6 | 0.8 |
| | TAIC | parts by mass | 1.2 | 1.7 |

<Production of laminate>

The thermoplastic elastomer 1 obtained in the previous step was injection-molded using a flat metal mold subjected to surface texturing. The resulting injection molded article of the thermoplastic elastomer was bonded to a polypropylene molded article serving as a base material to obtain a laminate.

The physical properties of the obtained thermoplastic elastomer injection molded articles and laminates were evaluated by the following methods. Tables 2 and 3 show the results.

(1) Shear storage modulus G'

The shear storage modulus G' of the injection molded article of the thermoplastic elastomer obtained in the previous step was measured using a dynamic viscoelastic tester under the following conditions:

Deformation modes: torsion
Frequency: 1 Hz
Dynamic strain: 0.5%
Temperature: 25°C

(2) MFR (g/10 min)

The melt flow rate of the thermoplastic elastomer obtained in the previous step was measured according to ISO 1133 under conditions of 230°C and a load of 2.16 kg.

(3) Acoustic evaluation

The evaluation was performed in a semi-anechoic chamber. The center of the laminate with two short sides fixed was vibrated using a hammer with a force of 10 N, and the impact sound at that time was recorded with a microphone. Post-analysis using an FFT analyzer was performed in a section of about 0.1 second, and two sound pressure levels were calculated: an A feature overall value [dB] and a sound pressure level [dB] in a 1/3-octave band with a center frequency of 2 kHz.

The quietness of the impact sound is higher when the A feature overall value is smaller, and the impact sound is less high-pitched and gives a less plasticky impression when the sound pressure level in the 1/3 octave band with a center frequency of 2 kHz is smaller. The quieter and the less plasticky the impact sound, the more the impact sound gives a sense of luxury.

(4) Kurtosis $R_{ku}$ value

The kurtosis $R_{ku}$ value of the injection molded article of the thermoplastic elastomer obtained in the previous step was calculated using a surface roughness profilometer under the following conditions:

Apparatus: surface roughness measuring machine SURFCOM 1400D, manufactured by Tokyo Seimitsu Co., Ltd.
Contactor: spherical $\varphi$ 2 $\mu$m
Specified load: 0.75 mN
Length: 40 mm
Cut-off wavelength: 8 mm
Speed: 0.15 mm/s

(5) Evaluation of tactile texture (press softness)

Compression work of the laminate obtained in the previous step was measured using a compression tester under the following conditions. The higher the value of the compression work, the softer the tactile texture when pressed, thus providing a high-quality tactile texture.

Apparatus: KES-G5 Compression Tester, manufactured by KATO
TECH CO.,LTD.
Contactor: spherical $\varphi$ 10 $\mu$m
Load: 500 gf
Speed: 0.02 mm/s

[Examples 2 to 4 and Comparative Example 4]

Laminates were prepared and evaluated in the same manner as in Example 1 except that the kurtosis $R_{ku}$ value of the skin material was changed using flat metal molds subjected to surface texturing with different kurtosis $R_{ku}$ values.

[Example 5 and Comparative Example 1]

Laminates were prepared and evaluated in the same manner as in Example 1 except that the material of the skin material was changed using the thermoplastic elastomer 2, and the kurtosis $R_{ku}$ value of the skin material was changed using flat metal molds subjected to surface texturing with different kurtosis $R_{ku}$ values.

[Comparative Example 2]

The base material was evaluated in the same manner as in Example 1, except that no skin material was used, and only a polypropylene molded article serving as a base material was used.

[Comparative Example 3]

A laminate was prepared and evaluated in the same manner as in Example 1 except that the kurtosis $R_{ku}$ value of the skin material was changed using flat metal molds subjected to surface texturing with different kurtosis $R_{ku}$ values, and the thermoplastic elastomer was changed to a general-purpose non-crosslinked olefinic thermoplastic elastomer.

[Comparative Example 5]

A laminate was prepared and evaluated in the same manner as in Example 1 except that the thickness and the kurtosis $R_{ku}$ value of the skin material was changed using flat metal molds subjected to surface texturing with different kurtosis $R_{ku}$ values.

<Evaluation result>

As shown in Table 2, the laminates of Examples 1 to 5 have high quietness of the impact sound because the A feature overall value is small. Since the sound pressure level in the 1/3 octave band with a center frequency of 2 kHz is small, the impact sound is less high-pitched, resulting in a less plasticky impression of the impact sound. Therefore, the impact sound gives a sense of luxury.

The laminates each have a soft tactile texture when pressed and a high-quality tactile texture since the compression work is large.

Comparative Example 1 has a soft tactile texture when pressed and a high-quality tactile texture since the compression work is large.

On the other hand, since the A feature overall value is 100 dB or more, the impact sound is less quiet. In addition, since the sound pressure level in the 1/3 octave band with a center frequency of 2 kHz is 86 dB or more, the impact sound is often high-pitched, resulting in a strong plasticky impression of the impact sound. Therefore, the impact sound lacks a sense of luxury.

Comparative Example 2 shows low quietness of the impact sound because the A feature overall value is 100 dB or more. In addition, since the sound pressure level in the 1/3 octave band with a center frequency of 2 kHz is 100 dB or more, the impact sound is often high-pitched and gives a strong plasticky impression. Therefore, the impact sound lacks a sense of luxury.

Furthermore, Comparative Example 2 has a hard tactile texture when pressed and lacks a high-quality tactile texture because the compression work is small.

Comparative Example 3 has a soft tactile texture when pressed and a high-quality tactile texture since the compression work is slightly large.

On the other hand, since the A feature overall value is 100 dB or more, the impact sound is less quiet. In addition, since the sound pressure level in the 1/3 octave band with a center frequency of 2 kHz is 95 dB or more, the impact sound is often high-pitched and gives a strong plasticky impression. Therefore, the impact sound lacks a sense of luxury.

Comparative Example 4 has a soft tactile texture when pressed and a high-quality tactile texture since the compression work is large.

On the other hand, since the A feature overall value is 100 dB or more, the impact sound is less quiet. Therefore, the impact sound lacks a sense of luxury.

Comparative Example 5 has a hard tactile texture when pressed and lacks a high-quality tactile texture because the compression work is small.

Since the A feature overall value is 100 dB or more, the impact sound is less quiet. Furthermore, since the sound pressure level in the 1/3 octave band with a center frequency of 2 kHz is 95 dB or more, the impact sound is often high-pitched and gives a strong plasticky impression. Therefore, the impact sound lacks a sense of luxury.

[Table 2]

Table 2

| | | | Example 1 | Example 2 | Example 3 | Example 4 | Example 5 |
|---|---|---|---|---|---|---|---|
| Skin material | Material | - | Thermoplastic elastomer 1 | Thermoplastic elastomer 1 | Thermoplastic elastomer 1 | Thermoplastic elastomer 1 | Thermoplastic elastomer 2 |
| | Shear storage modulus G' (23°C) | MPa | 20.3 | 20.3 | 20.3 | 20.3 | 12.2 |
| | MFR(230°C, 2.16 kg) | g/10min | 250 | 250 | 250 | 250 | 70 |
| | Thickness | mm | 1.0 | 1.0 | 1.0 | 1.0 | 1.0 |
| Base material (core material) | Material | - | PP | PP | PP | PP | PP |
| | Thickness | mm | 2.0 | 2.0 | 2.0 | 2.0 | 2.0 |
| Texture pattern value | Kurtosis $R_{ku}$ | - | 1.55 | 2.12 | 2.26 | 2.30 | 2.55 |
| Acoustic feature value | A feature overall value | dB | 92.6 | 92.1 | 96.1 | 94.5 | 97.7 |
| | Sound pressure level in 1/3 octave band with center frequency of 2 kHz | dB | 77.9 | 76.7 | 79.7 | 81.9 | 85.7 |
| Evaluation of tactile texture (press softness) | Compression work | gf·cm/cm$^2$ | 5.9 | 4.4 | 4.0 | 6.1 | 4.2 |

[Table 3]

Table 3

| | | | Comparative Example 1 | Comparative Example 2 | Comparative Example 3 | Comparative Example 4 | Comparative Example 5 |
|---|---|---|---|---|---|---|---|
| Skin material | Material | - | Thermoplastic elastomer 2 | None | Olefinic thermoplastic elastomer | Thermoplastic elastomer 1 | Thermoplastic elastomer 1 |
| | Shear storage modulus G' (23°C) | MPa | 12.2 | None | 129.0 | 20.3 | 20.3 |
| | MFR(230°C, 2.16 kg) | g/10min | 70 | - | 14 | 250 | 250 |
| | Thickness | mm | 1.0 | None | 1.0 | 1.0 | 0.1 |
| Base material (core material) | Material | - | PP | PP | PP | PP | PP |
| | Thickness | mm | 2.0 | 2.0 | 2.0 | 2.0 | 2.0 |
| Texture pattern value | Kurtosis $R_{ku}$ | - | 4.43 | 2.26 | 4.42 | 3.94 | 2.26 |
| Acoustic feature value | A feature overall value | dB | 101.5 | 106.8 | 104.5 | 100.0 | 101.9 |
| | Sound pressure level in 1/3 octave band with center frequency of 2 kHz | dB | 86.5 | 100.6 | 95.6 | 83.4 | 99.1 |
| Evaluation of tactile texture (press softness) | Compression work | gf·cm/cm$^2$ | 4.1 | 0.6 | 3.1 | 4.8 | 2.1 |

**Claims**

1.  A sheet-shaped skin material having

    a textured pattern with a kurtosis $R_{ku}$ value of 1.0 or more and 2.7 or less on at least one surface thereof,
    a shear storage modulus G' of 1 MPa or more and 100 MPa or less, and
    a thickness of 0.5 mm or more and 3.0 mm or less.

2.  The skin material according to claim 1, comprising a thermoplastic elastomer.

3.  A laminate comprising the skin material according to claim 1 and a core material laminated to each other, wherein a surface of the skin material opposite to the core material has the textured pattern.

4.  The laminate according to claim 3, wherein the core material comprises a propylene polymer.

5.  The laminate according to claim 3, wherein the core material has a thickness of 1.0 mm or more and 20.0 mm or less.

6.  The skin material according to claim 2, wherein the thermoplastic elastomer comprises:

    100 parts by mass of a propylene polymer (A);
    50 parts by mass or more and 700 parts by mass or less of a rubber polymer (B); and
    5 parts by mass or more and 400 parts by mass or less of a softener (C).

7.  The skin material according to claim 6, wherein the rubber polymer (B) comprises (B-1) and/or (B-2) below:

    (B-1) an ethylene/$\alpha$-olefin copolymer comprising a constituent unit derived from ethylene and a constituent unit derived from an $\alpha$-olefin having 3 to 20 carbon atoms; and
    (B-2) a hydrogenated product of a block copolymer comprising at least one block mainly including a conjugated diene monomer unit and at least one block mainly including a vinyl aromatic monomer unit.

8.  A molded laminate comprising the skin material according to claim 1.

9.  An instrument panel comprising the laminate according to claim 3.

## INTERNATIONAL SEARCH REPORT

| International application No. |
| --- |
| **PCT/JP2024/005888** |

**A. CLASSIFICATION OF SUBJECT MATTER**

*B32B 27/00*(2006.01)i; *B32B 27/32*(2006.01)i; *C08L 23/10*(2006.01)i; *C08L 53/02*(2006.01)i; *C08L 91/00*(2006.01)i
FI:  B32B27/00 B; C08L23/10; C08L53/02; C08L91/00; B32B27/32 Z

According to International Patent Classification (IPC) or to both national classification and IPC

**B. FIELDS SEARCHED**

Minimum documentation searched (classification system followed by classification symbols)

B32B27/00; B32B27/32; C08L23/10; C08L53/02; C08L91/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2022-157828 A (MITSUI CHEMICALS, INC.) 14 October 2022 (2022-10-14) claims, paragraphs [0078]-[0081], examples | 1-9 |
| Y | WO 2017/082199 A1 (AGC INC.) 18 May 2017 (2017-05-18) claims, paragraphs [0079], [0101], examples | 1-9 |
| Y | JP 2017-213881 A (ASAHI GLASS CO., LTD.) 07 December 2017 (2017-12-07) claims, paragraphs [0090], [0119], examples | 1-9 |
| Y | WO 2011/155571 A1 (ASAHI KASEI CHEMICALS CORPORATION) 15 December 2011 (2011-12-15) claims, paragraphs [0098]-[0103], examples | 1-9 |
| Y | JP 2022-155093 A (MITSUI CHEMICALS, INC.) 13 October 2022 (2022-10-13) claims, paragraphs [0087]-[0092], examples | 1-9 |
| A | JP 2022-136432 A (KURARAY CO., LTD.) 21 September 2022 (2022-09-21) claims, paragraphs [0035], [0042], examples | 1-9 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 April 2024** | **23 April 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/005888**

| Patent document cited in search report | | | Publication date (day/month/year) | Patent family member(s) | Publication date (day/month/year) |
|---|---|---|---|---|---|
| JP | 2022-157828 | A | 14 October 2022 | (Family: none) | |
| WO | 2017/082199 | A1 | 18 May 2017 | US 2018/0257978 A1 claims, paragraphs [0118], [0145], examples | |
| JP | 2017-213881 | A | 07 December 2017 | US 2017/0341451 A1 claims, paragraphs [0215], [0257], examples | |
| WO | 2011/155571 | A1 | 15 December 2011 | US 2013/0209787 A1 claims, paragraphs [0145]-[0150], examples | |
| JP | 2022-155093 | A | 13 October 2022 | (Family: none) | |
| JP | 2022-136432 | A | 21 September 2022 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011155571 A
- JP 42008704 B
- JP 43006636 B
- JP 63004841 B
- JP H01037970 B
- JP H01053851 B
- JP H02009041 B
- JP H08109219 A
- JP 36019286 B

- JP 43017979 B
- JP 46032415 B
- JP 49036957 B
- JP 48002423 B
- JP 48004106 B
- JP 56028925 B
- JP 59166518 A
- JP S60186577 A

**Non-patent literature cited in the description**

- **I. M. KOLTHOFF et al.** *J. Polym. Sci.*, 1946, vol. 1, 429